(19) Europäisches Patentamt

European Patent Office

Office européen des brevets

(11) **EP 1 318 458 A2**

(12) **EUROPEAN PATENT APPLICATION**

(43) Date of publication:
**11.06.2003 Bulletin 2003/24**

(51) Int Cl.⁷: **G06F 13/40**

(21) Application number: **02447242.5**

(22) Date of filing: **04.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO SI**<br><br>(30) Priority: **04.12.2001 EP 01870269**<br><br>(71) Applicants:<br>  • **M-Tec Wireless**<br>    **2800 Mechelen (BE)**<br>  • **INTERUNIVERSITAIR MICRO-ELEKTRONICA**<br>    **CENTRUM VZW**<br>    **3001 Heverlee (BE)** | (72) Inventors:<br>  • **Mennekens, Jan**<br>    **2640 Mortsel (BE)**<br>  • **Van Uffelen, Tom**<br>    **2650 Edegem (BE)**<br>  • **Van Poucke, Bart**<br>    **9100 Sint-Niklaas (BE)**<br>  • **Sanders, Steven**<br>    **8480 Eernegem (BE)**<br><br>(74) Representative: **Luys, Marie-José et al**<br>    **Gevers & Vander Haeghen NV,**<br>    **Intellectual Property House,**<br>    **Business Airport Park,**<br>    **Holidaystraat 5**<br>    **1831 Diegem (BE)** |

(54) **Device for transferring data arrays between buses and system for MAC layer processing comprising said device**

(57) A device for transferring data arrays between at least two buses, the device comprising storage means for storing at least one data array, a first input/output interface for transferring data arrays in a first direction from a first of the buses (RBUS) to the storage means and in a second direction from the storage means to the first bus (RBUS), a second input/output interface for transferring data arrays in a third direction from a second of the buses (MBUS) to the storage means and in a fourth direction from the storage means to the second bus (MBUS), the first and second interfaces being concurrently operable in each clock cycle, the device comprising means for receiving an instruction word within a clock cycle, the first interface being provided with first selecting means for selecting one of said first and second directions and the second interface being provided with second selecting means for selecting one of said third and fourth directions, the first and second selecting means being connected to said means for receiving instruction words and being controllable by means of data included in said instruction words.

Fig. 1

**Description**

The present invention relates to a device for transferring data arrays according to the preamble of the first claim. The invention also relates to a system for medium access control layer processing comprising said data transferring device.

Modern communication protocols, as they are available today, support high-speed data transmission. Examples are the ETSI HIPERLAN/2 and IEEE 802.11a protocols for 5 GHz wireless LANs (Local Area Networks). Both have a maximum data rate of 54 Mbits per second. These modern protocols have several layers. Hence they are called protocol stacks.

One of the layers of the protocol stack of the ETSI HIPERLAN or IEEE 802.11 series protocols is the Medium Access Control layer, usually called MAC layer. MAC layer operations require access to both protocol data and payload data. Because of the high data rates, the MAC layer must have a short response time in order to handle all of the tasks in a timely fashion. This short response time cannot be obtained using common state-of-the-art software implementation techniques. Hence, a dedicated hardware implementation would be required according to the state of the art. However, this would result in an expensive and inflexible design occupying a large silicon area.

An example of a known device for transferring data arrays, which is commonly used in high-speed data transmission systems, is a Direct Memory Access device (DMA). Such a DMA is connectable between a first and a second bus and capable of quickly transferring data from the first to the second bus and vice versa. However, in order to decide the direction of the data transfer, a plurality of initial programming steps is required for setting up the DMA before data transfer from one bus to the other can be started. As a result, a DMA does not enable one to quickly switch the direction of data transfer.

It is an aim of the present invention to provide a device for transferring data arrays with which the direction of data transfer can be changed more quickly.

This aim is achieved according to the invention with a device showing the technical characteristics of the characterising part of the first claim.

The device of the invention is designed for transferring data arrays between at least two buses. It comprises storage means for storing at least one data array, a first input/output interface for transferring data arrays from a first of the buses to the storage means and vice versa and a second input/output interface for transferring data arrays from the storage means to a second of the buses and vice versa. These interfaces are concurrently operable in a single clock cycle, so that a data array can be inputted simultaneously with the outputting of a data array.

In the device of the invention, the input/output interfaces to the first and second buses are each provided with selecting means for selecting the direction of data transfer through the respective interface, i.e. from the bus to the storage means or vice versa. The device further comprises means for receiving an instruction word within a clock cycle which are connected to the first and second interfaces. In this instruction word, data is included for controlling the selecting means of the first and second interfaces. In this way, one instruction word can be supplied to the device of the invention per clock cycle, and since the selecting means are provided for selecting the direction of data transfer through the first and second interfaces based on data included in the instruction words, the device of the invention enables one to select the direction of data transfer for each interface in a plurality of successive clock cycles. As a result, the need for a plurality of programming steps for switching the direction of data transfer is obviated, which can highly speed up the changing of the direction of data transfer.

With the known DMA, the decision in which direction the data should be transferred, i.e. from the first to the second bus or vice versa, can only be made by means of a host device, such as for example a common computer microprocessor. With the device of the invention, this decision can be made using the selecting means, which are incorporated in the device and which base their decision on data which is supplied to the device, namely data included in the instruction words. Not only does this severely reduce the time needed for switching the direction of data transfer, but this also avoids the need for a host device for making the decision, leaving the host device available for performing other tasks.

In a preferred embodiment, the data transferring device of the invention comprises a third input/output interface for transferring data arrays from the storage means to a third bus and vice versa. This third interface is concurrently operable with the first and second interfaces and is also provided with selecting means for selecting the direction of data transfer through the third interface, which are controlled by means of data included in the instruction words supplied to the device. This preferred embodiment of the device of the invention makes it possible to select in any given clock cycle any one of three buses as source bus for inputting a data and the two other buses as destination buses for outputting a data word, and furthermore to simultaneously input the data word carried on the source bus into the storage means and output the data word stored in the storage means in the previous clock cycle to both destination buses. The device of the invention may be further expanded to a device for transferring data arrays between four or more buses, in which an input/output interface with instruction-word-controllable selecting means is provided for each bus.

The means for receiving the instruction words are preferably formed by one of the first, second and third interfaces, which means that the instruction words are preferably supplied to the device via the first, second or third bus. Alternatively, the instruction words may also be supplied to the device via a dedicated instruction bus.

The selecting means of each of the input/output interfaces of the device of the invention are preferably formed by a bus controller, which is provided to control the direction of data transfer based on the data received in the instruction words. The selecting means may however also be formed by any other selecting means known to the person skilled in the art.

Preferably, the data transferring device of the invention further comprises a unit which is adapted for performing single-cycle instructions which are derived from said instruction words. This unit is concurrently operable with the input/output interfaces, so that it can function in parallel with the inputting and outputting of data arrays. In other words, this embodiment of the device of the invention is designed for enabling the concurrent performance of the following operations: loading a data array from a selected source bus into the storage means, placing a data array stored in the storage means on a selected destination bus and performing a single-cycle instruction by means of the unit.

This unit is preferably an arithmetic logic unit (ALU), It may however also be an adder, a shifter, a unit for multi-media extension (MMX) instructions, or any other unit for single-cycle instructions known to the person skilled in the art.

The ALU preferably controls the third selecting means, or in other words, the functioning of the third interface to the third bus. However, the functioning of the third interface may also be independent of the ALU.

The storage means of the device of the invention preferably comprise at least two registers, each provided for storing a data array: a first register which is accessible to the first and second interfaces and at least a second register which is provided in the ALU. The first register is used for storing a data array which is inputted from the selected source bus. The second register(s) are used for storing one or more data arrays which are used in the ALU instructions.

The single-cycle instructions, for which the ALU is designed, preferably comprise at least one of the following:

- copying a data array from one of the at least two registers to another of the at least two registers;
- a logical function, such as for example a logical NOT, on a data array stored in one of the second registers;
- a mathematical calculation, such as for example an increment or decrement, on a data array stored in one of the second registers;
- a logical combination, such as for example an OR, XOR, AND or other, of a data array stored in the first register and a data array stored in one of the second registers;
- a mathematical calculation, such for example an addition or a subtraction, using a data array stored in the first register and a data array stored in one of the second registers.

The above described features of the data transferring device of the invention make it very suitable for use in a system for implementing MAC layer processing. Due to the capability of deciding the direction of data transfer for each clock cycle and furthermore substantially independently of any host device, the device of the invention makes it possible to implement a larger amount of the MAC layer processing in software with respect to the prior art, without adversely affecting the response time. As a result, the need for a dedicated hardware implementation for achieving the required short response time for MAC layer processing can be obviated. Consequently, the device of the invention can provide a simpler, less expensive and more flexible design with respect to the prior art, which can furthermore be constructed on a smaller silicon area. The flexibility which can be achieved with the device of the invention, by implementing a larger amount of the MAC layer processing in software is advantageous, since the standards of the ETSI HIPERLAN or IEEE 802.11 series protocols are often changed. In the prior art hardware implementation, a slight change in protocol could require a whole new design, whereas in the case of the invention such change only involves a new software implementation.

According to the invention, the system for implementing MAC layer processing comprises the above described data transferring device for shifting data in real-time from a read bus to a master bus and vice versa. The system further comprises a memory for storing data arrays (payload data) and instruction words (code and protocol data) and at least one input/output peripheral. The memory is connected to the first interface of the data transferring device by means of the read bus. The at least one input/output peripheral comprises a data transmission device which is connected to the second interface of the data transferring device by means of the master bus.

The data transmission device may be provided for both wired and wireless data transmission. In case the system is provided for wireless communication, the data transmission device is preferably an OFDM (Orthogonal Frequency Division Multiplex) engine.

The memory is preferably a dual port random access memory of which a first port is connected to the read bus and a second port is connected to a host device.

In a preferred embodiment of the system of the invention, the data transferring device is also provided for issuing control data for the input/output peripherals. This control data may be supplied to the input/output peripherals via the master bus or, alternatively, via a dedicated control bus.

The system according to the invention preferably further comprises at least one coprocessor which is connected to the third interface of the data transferring device by means of an extension bus and which is controlled by the data transferring device, for example in a master-slave configuration. This coprocessor may also be formed by a data transferring device as described above, of which the first interface is connected to the read bus, the second interface is connected to the master bus and the third interface is connected to the extension bus. Alternatively, the coprocessor may also be any other processor known to the person skilled in the art, for adding functionality to the system of the invention. An example of such added functionality is the performing of data validity checks such as for example cyclic redundancy checks.

The invention will be further elucidated by means of the following description and the appended figures.

Figure 1 shows a preferred embodiment of the data transferring device of the invention.

Figure 2 shows an implementation of the data transferring device of the invention in a system for medium access control layer processing.

Figure 3 shows the structure of instruction words used for controlling the device of figure 1.

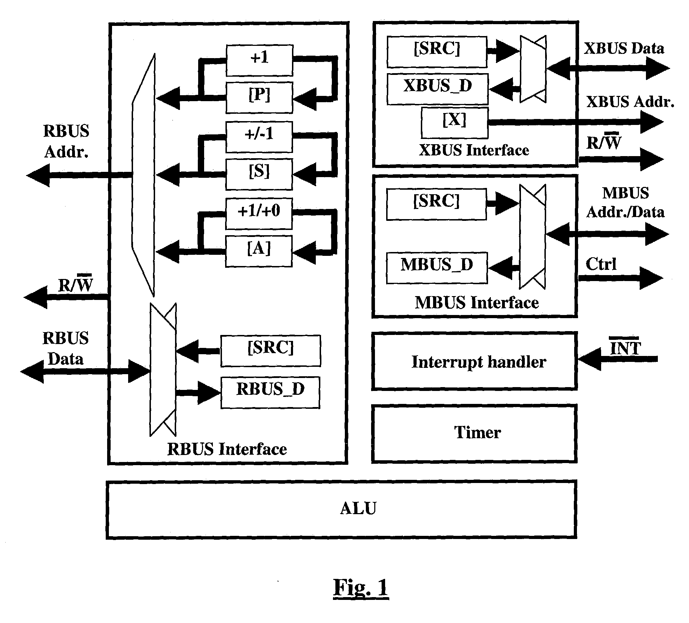

Several functional blocks can be distinguished in the device of figure 1. Three functional blocks are provided for receiving opcode, which is included in instruction words which are supplied to the device via one of the buses and which instruct the respective block to perform a given task. A first block is a first interface for accessing an external memory via a first bus, called the Read Bus (RBUS). A second block is a second interface to a second bus, called the Master Bus (MBUS). These first and second interfaces are each provided with a bus controller for selecting the direction of data transfer through the respective interface, based on the opcode included in the instruction words. A third block is an Arithmetic and Logic Unit (ALU). This ALU controls a third interface to a third bus, called the Extension Bus (XBUS). In the device of figure 1, the instruction words containing the opcode for controlling these three functional blocks are supplied from memory via the RBUS. Alternatively, the instruction words may also be supplied via the MBUS or the XBUS or a separate instruction bus. As each of these blocks is controllable by means of opcode included in the instruction words, the device of figure 1 makes it possible to perform one operation per functional block per instruction word fetched from memory.

The device of figure 1 further comprises two other functional blocks which are provided for performing a certain fixed task and are not controlled by opcode included in the instruction words. These blocks are an interrupt handler and a timer block. The device of figure 1 may further comprise other functional blocks known to the person skilled in the art.

The device of figure 1 is optimised for low-overhead data movement, but still enables one to perform a set of ALU operations. It has a single-word fixed-length single-cycle instruction set and is based upon a pseudo-VLIW (Very Large Instruction Width) architecture. Pseudo means that each instruction has a fixed length of e.g. 16 bits, but the length may also be more or less bits. Depending on the opcodes in the instruction, different operations are done in parallel. This is different from a true VLIW architecture where instructions have a bit indicating whether the next instruction executes in parallel. Typically much larger instruction widths and a larger number of ALUs are used in a true VLIW architecture.

The device of figure 1 comprises storage means for storing a.o. data arrays which are uploaded from the RBUS, MBUS or XBUS, and address data associated with the data arrays. These storage means comprise two main registers, namely a source register [SRC] for storing the address where a data array is to be read and a destination register [DST] for storing the address where a data array is to be written. The storage means further comprise the following registers, an overview of which is also given in table 1.

- The [A] or "Address" register is used as address for the RBUS. It can be post-incremented in case of certain instructions. It can be used as a general-purpose register when there are no RBUS operations. This register is read/write.
- The [B] or "Base" register is used as special operand in ALU instructions: to contain the shift configuration information, to contain the jump address in case of a copy-loop jump instruction. It can also be used as a general-purpose register when these ALU instructions are not executed. This register is read/write.
- The [C] or "Count" register is a general-purpose register. This register is read/write.
- The [D] or "Data" register is a general-purpose register. This register is read/write.
- The [L] or "Last" MBUS address register holds the current MBUS address. It is updated when an address cycle is executed on the MBUS, or when a read/write access with auto-increment is executed. This register is read only.
- The [M] or "MBUS" register is the implicit destination of all MBUS read operations. This register is read-only.
- The [P] or "Program" register is the program counter: the next instruction is fetched from this location, and then the register is incremented. This register is write-only. When writing, the contents will be copied over to the [R] register. If the [P] register is zero, the device is halted. It can be read using a special ALU operation.
- The [R] or "Return" register holds the previous value of the [P] register if it is written. This register is read-only. It is written implicitly when writing the [P] register.

- The [S] or "Stack" register is used as a software stack pointer. It is used for building a software stack in external memory. The [S] register always points to the next free space on the stack. The stack grows upwards, i.e. a push will post-increment the [S] register, whereas a pop will pre-decrement it. This register is write-only. It can be read using a special ALU operation.

- The [W] or "Working" register is used as the primary input register of all ALU operations, both single and dual operand operations. It is also the implicit destination register for the result of all ALU operations. Single operand ALU instructions only use this register as the input. It is also used as the flag register for conditional instructions. This register is read/write.

- The [X] or "eXtension" register will be used as address for XBUS operations. It can be used as a general-purpose register when the XBUS is not used. This register is read/write.

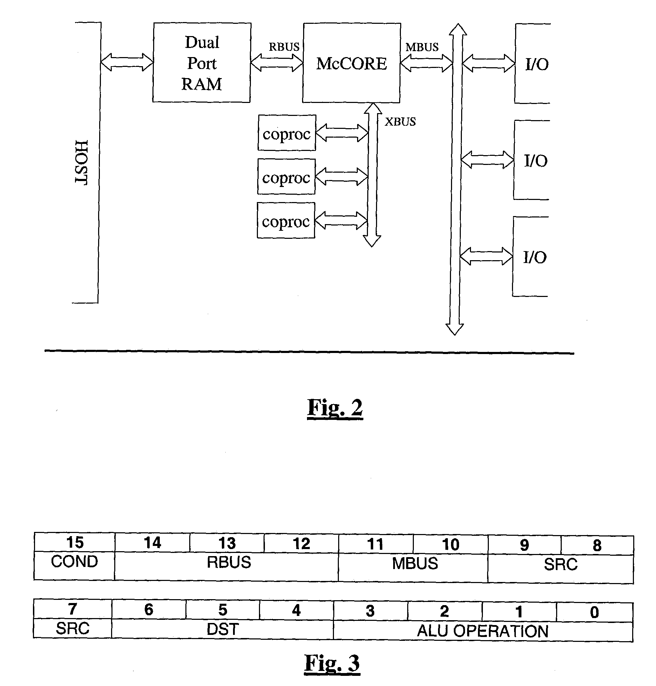

The opcodes for controlling the functional blocks of the device are contained in instruction words, which are supplied to the device per clock cycle via the RBUS. These instruction words are structured in subsections as shown in figure 3. Bit 15 "COND" is used to make the execution of the instructions conditional. Bits 12-14 are used to control the RBUS interface with bit 14 specifying if a read or write operation is to be executed. Bits 10-11 are used to control the MBUS interface, with bit 11 specifying if a read or write operation is to be executed. Bits 7-9 are used to select the source register (the [SRC] register is set to the value of one of the registers of table 1) or to select a constant. Bits 4-6 are used to select the destination register (the [DST] register is set to the value of one of the registers of table 1). Bits 1-4 are used to control the ALU.

The execution of instruction words consists of two phases. These two phases are executed within 1 cycle of the master clock (e.g. 10 MHz). The first phase is executed when the master clock signal is low, and is called the instruction phase. The second phase is executed when the master clock signal is high, and is called the operand phase. The instruction phase is always executed because it fetches the instruction. The operand phase is the actual execution of the previously fetched instruction. It can comprise the following operations in parallel: a read from or a write to external memory at some given address (RBUS interface operation), an access on the Master Bus (MBUS interface operation) and an operation performed by the ALU. If the fetched instruction issues an operand cycle, then the operand phase of that instruction is executed. If the fetched instruction doesn't issue an operand cycle, but a NOP for example, then the operand phase is skipped and the pipeline stalls for ½ cycle of the master clock. The value in the registers is updated every falling edge of the master clock signal and is valid during the instruction and operand phase of the next instruction.

The ALU of the device of figure 1 is designed for performing operations on one or two operands. If only one operand is needed, it is always the [W] register (except for the "set" operation, see below). If two operands are needed, both the [W] register and the specified source are used (except for the "shift" operation, see below). The result of this operation is then stored either in the [W] register or in the specified destination register. The following ALU operations are supported:

- NOP: no operation is performed. There is no [ALU] result, and neither the destination register nor the [W] register is changed.

- SET - [ALU] = [SRC]: performs a SET operation. The specified source is copied into the [ALU] result. This allows register-to-register copies, or loading one register from the RBUS in parallel copying the specified source register into the [W] register.

- XWR — write [SRC] to XBUS: performs an XBUS WRite operation. The specified source register is written to the XBUS, using the [X] register as address pointer. There is no [ALU] result, and neither the destination register nor the [W] register is changed.

- XRD — read XBUS into [ALU]: performs an XBUS ReaD operation. The XBUS is read at the address specified with the [X] register, and the result placed into the [ALU] result.

- LNOT — [ALU] = logical NOT of [W]: performs a Logical NOT operation. If the [W] register is zero, the [ALU] result is 0xFFFF, else the ALU result is 0x0000. This performs a logical not, useful to invert the conditional execution. A bitwise not function is not implemented: an exclusive or with the pre-defined constant 0xFFFF can be used instead.

- SETC — [ALU] = constant, depending on [SRC]: performs a SET Constant operation. The [ALU] result is one of eight possible constant values, selected using the source register bits 7-9.

- DEC — [ALU] = [W] - 1: performs a DECrement operation. The [W] register is decremented by one, and the result written to the [ALU] result.

- DECJ — [ALU] = [W] - 1; [P] = [B]: performs a DECrement and Jump operation. The [W] register is decremented by one, and the result written to the [ALU] result. Also, the [B] register is copied to the [P] register, performing a jump. The [R] register is also written with the old value of the [P] register. By combining this operation with the [W] non-zero condition, one instruction zero-overhead loops can be coded (see "copyloop" below).

- ADD — [ALU] = [SRC] + [W]: performs an ADD operation. The [W] register is added to the [SRC] register, and the result written to the [ALU] result. The carry bit is lost.
- SUB — [ALU] = [SRC] - [W]: performs a SUBtract operation. The [W] register is subtracted from the [SRC] register, and the result written to the [ALU] result. No borrow is performed. A compare [SRC] not equal to [W] can be performed using the SUB instruction. It will generate a condition in the [W] register, which can be used for conditional execution of the next instruction.
- AND — [ALU] = [SRC] and [W]: performs an AND operation. A bitwise and function is performed between the [W] register and the [SRC] register, and the result written to the [ALU] result.
- OR — [ALU] = [SRC] or [W]: performs an OR operation. A bitwise or function is performed between the [W] register and the [SRC] register, and the result written into the [ALU] result.
- XOR — [ALU] = [SRC] xor [W]: performs an XOR operation. A bitwise exclusive or function is performed between the [W] register and the [SRC] register, and the result written into the [ALU] result. A bitwise not function is not implemented: an exclusive or with the pre-defined constant 0xFFFF can be used instead.
- SHIFT — [ALU] = shift operation on [W] using [B]: performs a SHIFT operation. The shift operation can only be performed on the [W] register. The [B] register dictates the details of the shift operation.
- CMP — [ALU] = ([SRC] > [W]): performs a CoMPare greater than operation. The compare operation compares the [SRC] register to the [W] register, and will return 0xFFFF into the [ALU] result if [SRC] is greater than [W], or 0x0000 if [SRC] smaller or equal to [W]. A compare [SRC] not equal to [W] can be performed using the 'sub' instruction.

As an example, a very useful instruction which can be performed by the device of figure 1, is the following, so-called "copyloop" instruction:

Copyloop: ifw, D=readi, mwrite (D), decj

wherein "ifw" means conditional execution (bit 15); "D=readi" means read the data array at the specified address of the external memory into the data register [D] and increment address, "mwrite (D)" means write the data array stored in [D] to the master bus; "decj" means decrement and jump (ALU operation). This copyloop instruction shows that the device of figure 1 enables one to quickly transfer subsequent data arrays from an external memory to the master bus, while an ALU operation can be performed in parallel.

The core architecture of figure 1 has been found to be perfectly adequate to implement the lower MAC layers of modern wireless communication protocols such as ETSI HIPERLAN/2 and IEEE 802.11a. The amount of FPGA code to implement is relatively low enabling the interconnection of several of these cores to increase flexibility, speed or processing power.

Figure 2 shows a system for implementing MAC layer processing, in which the data transferring device of figure 1 is referred to with the name "McCore". In the system, McCore is used for shifting data in real-time from a read bus RBUS to a master bus MBUS and vice versa. A memory for storing data arrays (payload data) and instruction words (code and protocol data) is connected to the read bus RBUS and number of input/output peripherals I/O are connected to the master bus MBUS. The I/O blocks are typically an OFDM (Orthogonal Frequency Division Multiplexing) engine and a coding/decoding engine (e.g. Viterbi or turbo).

In the system of figure 2, the memory is a dual port random access memory (DPR) of which a first port is connected to the read bus RBUS and a second port is connected to a host device HOST. The memory may however also be any other memory known to the person skilled in the art. Typically this host will perform the next higher protocol layer tasks. In the transmit case the DPR contains both code, protocol data and payload data to be processed and moved to the MBUS. In the receive case, the DPR will also contain code and protocol data whereas the payload data movement will be from the MBUS to the RBUS. Hence, in any case it is a characteristic of the invention that the RBUS can contain both code and data to be processed which is a characteristic feature of object-oriented programming.

In the system of figure 2, the data transferring device McCore is also provided for issuing control data for the input/output peripherals I/O. This control data may be supplied to the input/output peripherals I/O via the master bus MBUS or, alternatively, via a dedicated control bus (not shown).

The system of figure 2 further comprises a number of coprocessors which are connected to the third interface of the data transferring device McCore by means of an extension bus XBUS. These coprocessors are controlled by the data transferring device McCore, for example in a master-slave configuration. Each of these coprocessor may be formed by the data transferring device McCore of figure 1, of which the RBUS interface is connected to the read bus RBUS, the MBUS interface is connected to the master bus MBUS and the XBUS interface is connected to the extension bus XBUS. Alternatively, the coprocessor may also be any other processor known to the person skilled in the art, for adding functionality to the system of the invention. An example of such added functionality is the performing of data validity checks such as for example cyclic redundancy checks.

Table 1:

| register usage overview | |
|---|---|
| REGISTER | USAGE |
| [A] | • Address register to external memory<br>• General purpose usage if no operand phase memory accesses need to be executed<br>• Read and write capabilities |
| [B] | • Special ALU operation register<br>• General purpose usage if not needed by ALU<br>• Read and write capabilities |
| [C] | • General purpose register<br>• Read and write capabilities |
| [D] | • General purpose register<br>• Read and write capabilities |
| [L] | • Holds current address on MBUS<br>• Read capabilities |
| [M] | • Implicit destination of the data when a read from the MBUS is executed<br>• Read capabilities |
| [P] | • Program counter register<br>• Write capabilities |
| [R] | • Hardware stack register<br>• Read capabilities |
| [S] | • Software stack pointer register<br>• Write capabilities |
| [W] | • Second ALU input register<br>• Read and write capabilities |
| [X] | • Address register for accesses to extension co-processor interface<br>• General purpose register if no accesses on the extension interface are executed<br>• Read and write capabilities |

## Claims

1. A device for transferring data arrays between at least two buses, the device comprising storage means for storing at least one data array, a first input/output interface for transferring data arrays in a first direction from a first of the buses (RBUS) to the storage means and in a second direction from the storage means to the first bus (RBUS), a second input/output interface for transferring data arrays in a third direction from a second of the buses (MBUS) to the storage means and in a fourth direction from the storage means to the second bus (MBUS), the first and second interfaces being concurrently operable in each clock cycle, **characterised in that** the device comprises means for receiving an instruction word within a clock cycle, and **in that** the first interface is provided with first selecting means for selecting one of said first and second directions and the second interface is provided with second selecting means for selecting one of said third and fourth directions, the first and second selecting means being connected to said means for receiving instruction words and being controllable by means of data included in said instruction words.

2. The device of claim 1, **characterised in that** the device is provided for transferring data arrays between three buses, the device further comprising a third input/output interface for transferring data arrays in a fifth direction from a third of the buses (XBUS) to the storage means and in a sixth direction from the storage means to the third bus (XBUS), the third interface being concurrently operable with the first and second interfaces, the third interface being provided with third selecting means for selecting one of said fifth and sixth directions, the third selecting means being connected to said means for receiving instruction words and being controllable by means of data included in said instruction words.

3. The device of claim 1 or 2, **characterised in that** said means for receiving instruction words are formed by one of said interfaces.

4. The device of any one of the claims 1-3, further comprising a unit which is adapted for performing single-cycle instructions which are derived from said instruction words, said unit being concurrently operable with the first and second interfaces.

5. The device of claim 4, **characterised in that** said unit is an arithmetic logic unit (ALU).

6. The device of claim 5, **characterised in that** said third selecting means are controlled by said arithmetic logic unit (ALU).

7. The device of claim 5 or 6, **characterised in that** said storage means comprise at least two registers, each provided for storing a data array, a first of the at least two registers being accessible to the first and second interfaces and at least a second of the at least two registers being provided in said arithmetic logic unit (ALU).

8. The device of claim 7, **characterised in that** said arithmetic and logic unit (ALU) is adapted for performing at least one of the following single-cycle instructions:

   - copying a data array from one of the at least two registers to another of the at least two registers;
   - a logical function on a data array stored in one of the second registers;
   - a mathematical calculation on a data array stored in one of the second registers;
   - a logical combination of a data array stored in the first register and a data array stored in one of the second registers;
   - a mathematical calculation using a data array stored in the first register and a data array stored in one of the second registers.

9. A system for medium access control layer processing comprising the device of any of the claims 1-8 for real-time data shifting from a read bus (RBUS) to a master bus (MBUS) and vice versa, the system further comprising a memory for storing data arrays and instruction words which is connected to the first interface by means of the read bus (RBUS), and at least one input/output peripheral (I/O) which is connected to the second interface by means of the master bus (MBUS), said at least one input/output peripheral (I/O) comprising a data transmission device.

10. The system of claim 9, **characterised in that** the data transmission device is provided for wired data transmission.

11. The system of claim 9, **characterised in that** the data transmission device is provided for wireless data transmission.

12. The system of claim 9, **characterised in that** the data transmission device is an OFDM engine.

13. The system of any one of the claims 9-12, **characterised in that** said memory is a dual port random access memory of which a first port is connected to the read bus and a second port is connected to a host device.

14. The system of any one of the claims 9-13, **characterised in that** said device is provided for issuing control data for said at least one input/output peripheral (I/O).

15. The system of claim 14, **characterised in that** said control data is transferred over said master bus (MBUS) to said input/output peripherals.

16. The system of claim 14, **characterised in that** the system further comprises a fourth bus for transferring said control data from said device to said input/output peripherals.

17. The system of any one of the claims 9-16, **characterised in that** the system further comprises at least one co-processor which is connected to the third interface of said device by means of an extension bus (XBUS) and which is controlled by said device.

18. The system of claim 17, **characterised in that** said at least one coprocessor is a device according to any one of the claims 2-8 of which the first interface is connected to said read bus (RBUS), the second interface is connected to said master bus (MBUS) and the third interface is connected to said extension bus (XBUS).

19. The system of claim 17 or 18, **characterised in that** said coprocessor is provided for performing cyclic redundancy checks.

**Fig. 1**

**Fig. 2**

| 15 | 14 | 13 | 12 | 11 | 10 | 9 | 8 |
|----|----|----|----|----|----|----|----|
| COND | | RBUS | | | MBUS | | SRC |

| 7 | 6 | 5 | 4 | 3 | 2 | 1 | 0 |
|----|----|----|----|----|----|----|----|
| SRC | | DST | | | ALU OPERATION | | |

**Fig. 3**